# DEMANDE DE BREVET EUROPEEN

(11) **EP 0 893 056 A1**
(43) Date de publication de la demande: **27.01.1999**
(21) Numéro de dépôt: 97401776.6
(22) Date de dépôt: 24.07.1997
(51) Int. Cl.: A01K 97/02

(54) **Dispositif d'amorcage pour la pêche au pain en rivières, étangs, lacs, du bord ou de barque**

(71) Demandeur: Queval, Noel, 94700 Maisons Alfort (FR)
(72) Inventeur: Queval, Noel, 94700 Maisons Alfort (FR)

(57) **Abrégé**

Il est constitué d'une corde(1),terminée par une boucle à laquelle sont fixés un filet(2) et un poids(4) permettant de descendre l'amorce de pain à la profondeur voulue et d'y disperser les particules de pain dans l'eau sous l'action, du courant en rivières ou du pêcheur en étangs ou lacs.

Le dispositif d'amorcage pour la pêche au pain, selon l'invention est particulièrement destiné à la pêche en rivières,étangs,lacs,du bord ou de barque.

## Description

La présente invention concerne un dispositif d'amorcage pour la pêche au pain en rivières,étangs,lac,du bord ou de barque.

L' amorcage est habituellement réalisé à l'aide de farines mouillées, serrées en boules et jetées à l'eau.

Cette facons de faire ne permet pas de changer d'endroit, ni de régler la profondeur de propagation de l'amorce, ni de pêcher dans les courants, elle est en outre onéreuse.

Le dispositif d'amorcage selon l'invention permet de déposer l'amorce à l'endroit et à la profondeur exacts choisis ( également par fort courant ), grace à l'utilisation d'un petit filet présenté au bout d'une corde lestée d'un poids de 2 kg environ.

L'amorce constituée de croutes de pain rend la pratique de la pêche très bon marché .
2 kg de pain se dispersent en particules en environ 4 heures sous l'action, du courant en rivières ou du pêcheur en étangs, lacs.

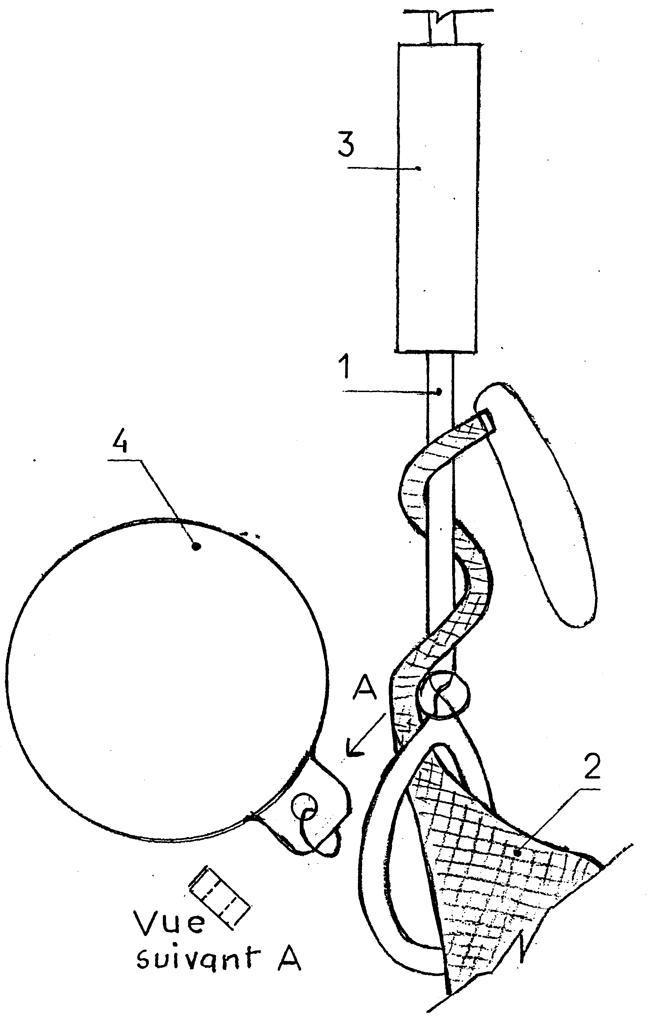

Le dessin annexé illustre l'invention.
En référence à ce dessin le dispostif d'amorcage comporte une corde(1) terminée par une boucle de 20 cm dans laquelle passe l'extrémité du filet(2) entourée le long de la corde et maintenue par la gaine(3) qui coulisse a force.
Le poids(4) muni d'une attache rapide est fixé au bas de la boucle.
La corde(1) de diamètre 5,5 mm d'une longueur de 10 à 30 mètres terminée par une boucle de 20 cm.
Le filet(2) de 40 cm de hauteur et 25 cm de large,fèrmé par un cordon contient 2 kg de pain détrempé et écrasé grossièrement ,les mailles ont de 3 à 5 mm.
La gaine(3) en plastique de longueur 10 cm et de 1,5 cm de diamètre.
Le poids(4) de 1,5 a 2 kg et de 8 cm de diamètre selon densité du métal permet de descendre et de maintenir dans l'eau à la profondeur voulue l'amorce de pain. La forme sphérique évite d'accrocher sur les fonds encombrés.

Un morceau de tole de 2cm par 2cm sur 8 mm d'épaisseur percé d'un trou de 6 mm de diamètre est soudé sur le poids et permet de le fixer sur la boucle à l'aide d'une attache rapide.

Le dispositif d'amorcage pour la pêche au pain est particulièrement destiné à la pêche en rivières,étangs,lacs,du bord ou de barque.

## Revendications

1. Dispositif d'amorçage pour la pêche au pain en rivières, étangs, lacs, du bord ou de barque.
Caractérisé en ce qu'il comporte une corde (1) terminée par une boucle de 20 cm, boucle dans laquelle passe l'extrémité d'un filet (2) contenant du pain détrempé et écrasé grossièrement, l'extrémité entourée sur la corde (1) étant maintenue et fixée en descendant une gaine (3) qui coulisse à force.

2. Dispositif d'amorçage selon la revendication caractérisée en ce qu'il comporte un poids (4) de 1,5 kg à 2 kg fixé à la bouche de la corde (1) à l'aide d'une attache rapide parmettant de descendre et de maintenir l'amorce de pain à la profondeur voulue.
